Europäisches Patentamt

European Patent Office

Office européen des brevets

(19)

(11) EP 1 447 854 A2

(12) **EUROPEAN PATENT APPLICATION**

(43) Date of publication:
18.08.2004 Bulletin 2004/34

(51) Int Cl.7: **H01L 33/00**

(21) Application number: 04003137.9

(22) Date of filing: 12.02.2004

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 13.02.2003 JP 2003035629
19.09.2003 JP 2003328356

(71) Applicant: **FUJI PHOTO FILM CO., LTD.**
**Kanagawa-ken (JP)**

(72) Inventors:
• **Fujimoto, Hiroshi**
**Minami-ashigara-shi Kanagawa-ken (JP)**
• **Takahashi, Kenji**
**Kaisei-machi Ashigara-kami-gun Kanagawa (JP)**
• **Ikada, Tomotake**
**Kaisei-machi Ashigara-kami-gun Kanagawa (JP)**

(74) Representative: **HOFFMANN - EITLE**
**Patent- und Rechtsanwälte**
**Arabellastrasse 4**
**81925 München (DE)**

(54) **AC operating electroluminescence device**

(57) An AC operating electroluminescence device, which has:

a light-emitting layer (14) containing phosphor particles (14a); and

an insulating layer (16) containing an inorganic dielectric substance,

wherein the electroluminescence device is capable of causing electroluminescence,

wherein a total thickness of the light-emitting layer and the insulating layer is less that 15 μm, and

wherein the electroluminescence device starts light emission when an average field intensity applied between electrodes in the electroluminescence device is 0.05 MV/cm or more.

*F i g. 1*

EP 1 447 854 A2

**Description**

FIELD OF THE INVENTION

The present invention relates to an alternative-current (AC) operating electroluminescence device, specifically, to an AC operating electroluminescence device having a dispersion-type-like structure in which a light-emitting layer contains phosphor particles.

BACKGROUND OF THE INVENTION

In recent years, an electroluminescence (EL) device, which is a self-luminescence device as a surface illuminant, has been expected to serve, for example, as a novel display device requiring no additional light source. Conventional electroluminescence devices are classified into two types: a "dispersion type" and a "thin film type". Also, direct-current (DC) driven electroluminescence devices have been proposed, but recent research and development have been targeted particularly on AC driven devices of high practical use rather than the DC driven ones. First of all, a schematic description will be given below of a basic structure, a light emission mechanism, and characteristics of the conventional AC operating electroluminescence device of each of the dispersion type and the thin film type, as described, for example, in "Electroluminescent Display", by Toshio INOGUCHI, 1st Edition, Sangyo Tosho Kabushiki Kaisha (July 25, 1991).

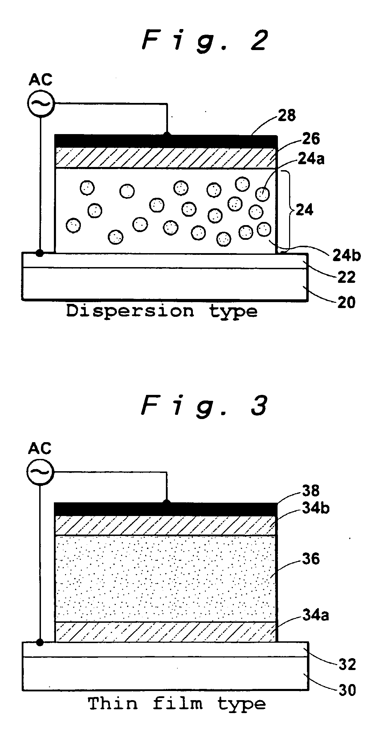

The dispersion-type AC operating electroluminescence device is typically structured as follows. That is, as shown in Fig. 2, a transparent electrode 22 is formed by applying a transparent conductive film material on a transparent substrate 20 composed, for example, of glass or polyethylene terephthalate (PET) sheet. A light-emitting layer 24, an insulating layer 26, and a back electrode 28 are provided thereon as superimposing layers. In the light-emitting layer, phosphor particles 24a are dispersed free into a binder 24b as a dielectric. Further, an additional layer such as a surface protective layer may be provided. When an AC voltage is applied between the transparent electrode 22 and the back electrode 28, the phosphor particles 24a inside the light-emitting layer 24 emit an electroluminescence, which is transmitted to the outside through the transparent electrode 22 and the transparent substrate 20. The insulating layer 26 is adapted to cut off a current path and stably apply a high electric field to each phosphor particle 24a. Alternatively, if the above phosphor particles 24a are dispersed completely free from each other, and the current path in the light-emitting layer 24 is cut off, the insulating layer 26 may be omitted. The electroluminescence device can be applied to a color display and the like, if a plurality of the devices, structured as shown in Fig. 2, are multiply superimposed or laminated, in which different kinds of phosphor particles are used corresponding to plural colors, and every intermediate electrode is formed as a transparent electrode.

Used as the phosphor particles of the dispersion-type AC operating electroluminescence device are particles prepared by adding an activator to a phosphor base material, typically, ZnS:Cu,Cl phosphor particles emitting a blue-green light. In addition, ZnS:Cu,Al (green) or ZnS:Cu,Cl,Mn (yellowish orange) phosphor particles are used according to a desired luminescence color, for instance. Here, it is said from the viewpoint, for example, of light emission mechanism discussed below that the activator needs to contain copper. Further, there are only a limited number of kinds of base materials to which copper can be added. Examples of such base materials of practical use include only ZnS, CaS, and SrS. Due to limitations on the material etc., it is considered that an optimum particle diameter of the phosphor particle for the dispersion-type AC operating electroluminescence device is around 20 $\mu$m. Although a phosphor particle having a particle size somewhat smaller than 20 $\mu$m is used in some cases, it is known in the art that a light-emission luminance conspicuously drops if the particle diameter is smaller than 2 to 3 $\mu$m, so that the particle diameter cannot be reduced below that level. Further, when the thickness of the light-emitting layer is too small relative to the particle diameter of the phosphor particles, the device entails short-circuit, light emission luminance irregularity, or like other drawbacks. For that reason, the thickness of the light-emitting layer is generally set to about 50 to 100 $\mu$m in the conventional dispersion-type AC operating EL device.

The light emission of the dispersion-type AC operating electroluminescence device is induced such that elements added as the activator function as a donor and an acceptor to cause recombination. To take as an example the above ZnS:Cu,Cl phosphor particles, Cl and Cu function as a donor and an acceptor, respectively. Further, the light emission is not caused uniformly in all the phosphor particles but is supposedly locally caused in a portion where a needle crystal of $Cu_2S$ precipitates along a lattice defect in a ZnS particle.

As shown in Fig. 3, the thin-film-type AC operating electroluminescence device is typically structured as follows. That is, like the dispersion-type one, a transparent electrode 32 is formed on a transparent substrate 30, and a first insulating layer 34a, a light-emitting layer 36, a second insulating layer 34b, and a back electrode 38 are superimposed thereon. The light-emitting layer 36 including the phosphor is formed into a thin film by vacuum deposition (vacuum evaporation), sputtering, or other methods. Further, an additional layer, such as a surface protective layer, or a buffer layer between the light-emitting layer and the insulating layer, may be provided. In general, each layer other than the light-emitting layer 36 is also formed by a thin-film forming technique such as vacuum deposition. Here, the device of Fig. 3 is shown with almost the same thickness as that of the device of Fig. 2 for convenience of explanation. In actuality, however, the thickness of the thin-film-type AC operating electroluminescence device is about 1/100 of that of the dispersion-type AC operating electroluminescence device. When an AC voltage is applied between the transparent electrode 32 and the back electrode 38, the light-emitting layer 36 emits an electroluminescence, which is transmitted to the outside through the transparent electrode 32 and the transparent substrate 30. The phosphor material used for the light-emitting layer 36 is typified by ZnS:Mn prepared by doping ZnS as a base material with Mn as an luminescence center, which emits yellowish orange light. With regard to the thin-film-type device as well, by adopting a structure called a "dual pattern system" or "triple pattern system" or by mutually superimposing or laminating the ones structured as shown in Fig. 3 corresponding to plural colors, the device can be applied to a color display and the like. In the above system, light-emitting portions doped with different kinds of luminescence center are two-dimensionally arranged corresponding to plural colors. Note that, unlike the dispersion-type one, the insulating layer (34a, 34b) is indispensable for cutting off the current path, so that at least one of the insulating layers cannot be omitted.

The dispersion-type AC operating electroluminescence device emits light through the recombination between the donor and the acceptor. On the other hand, the thin-film-type AC operating electroluminescence device emits light owing to collision excitation of the luminescence center caused by hot electrons passing through the base material. The hot electrons are generated by accelerating, under a high electric field during the application of the AC voltage, electrons that are injected into the light-emitting layer 36, for example, from an interface between the light-emitting layer 36 and the insulating layers 34a and 34b and/or from a trap in the light-emitting layer 36.

Comparing the dispersion-type AC operating electroluminescence device with the thin-film-type one, either device has an advantage and a disadvantage. The dispersion-type one has advantages, for example, in that a manufacturing process with no vacuum deposition or the like is simple, thus a manufacturing cost thereof is low, a large-size device can be manufactured with ease, and a flexible device with a flexibility can be manufactured. Its disadvantages include a lower luminance than that of the thin-film-type one, few color varieties, and a large particle diameter of the dispersed phosphor particles, which makes it difficult to apply the device to a high-definition display or the like. On the other hand, the thin-film-type one has advantages, for example, in that the luminance is higher than that of the dispersion-type one and thus is high in brightness, the wide variations of luminescence center for defining the luminescence color enable the color representation with a variety of colors, and the high-definition display can be realized. The thin-film-type device entails disadvantages, for example, in that the manufacturing process is complicated to increase the manufacturing cost. Also, in the thin film type, most of the emitting light is subjected to total reflection on the interface between the light-emitting layer and the insulating layer. The thin-film-type one involves, therefore, a problem in that the light extraction efficiency is as extremely low as about 5 to 10%.

The reason why a high luminance is hard to achieve with the dispersion-type one is that the luminance is saturated at a relatively low field intensity of about 0.05 MV/cm applied to the phosphor particles. If the field intensity is increased further, the luminance is decreased conversely. This is supposedly because the electrons trapped by the donor are blocked out by the high electric field to be separated, before moving to the acceptor. Also, because of the above-mentioned limitations on the particle size of the phosphor particles and the thickness of the light-emitting layer, even within a field intensity range below the field intensity causing the saturation of the luminance, there is a limit to improving the luminance by increasing the field intensity applied to the phosphor particle, by reducing the thickness of the light-emitting layer.

On the other hand, proposed, for example, in International Patent Application Publication WO 02/080626 Pamphlet and JP-A-2000-195674 ("JP-A" means unexamined published Japanese patent application) is an AC operating electroluminescence device which has the dispersion-type-like structure similar to the one of Fig. 2 but adopts, as the phosphor particles dispersed free in the light-emitting layer, a phosphor material containing substantially no Cu conventionally used in the light-emitting layer of the thin-film-type one, the material being formed into a particle form. In the AC operating electroluminescence device, electrons are injected into the phosphor particles, for example, from an interface between the phosphor particle and the surrounding dielectric and/or a trap in the phosphor particle, and the injected electrons are accelerated to form hot electrons, causing the collision excitation of the luminescence center in the phosphor particle. As a result, it is supposed that a light emission mechanism similar to the conventional thin-film-type one is realized. The basic structure itself is the same as the conventional dispersion-type one, enabling the reduction of manufacturing costs. The device described in JP-A-2000-195674 adopts an insulating layer having a high dielectric constant and thus exhibits a maximum light emission luminance of about 1,000 cd/m$^2$, which is higher than that of the conventional dispersion-type one using the phosphor particles including the copper as an activator.

To make the particle size small and obtain high luminance, for example, JP-B-1-18117 ("JP-B" means examined Japanese patent publication) discloses a method of forming a generation layer, made of ZnO or the like, on the surfaces of ultrafine particles, to form P-N junctions, and introducing luminous mechanisms to the resultant interface.

As mentioned above, the AC operating electroluminescence device having the dispersion-type-like structure and adopting, as phosphor particle, the phosphor conventionally used in the light-emitting layer of the thin-film-type one, achieves the maximum light emission luminance of about 1,000 cd/m$^2$, which is higher than that of the conventional dispersion-type AC operating electroluminescence device. However, the luminance level is merely equal to or somewhat lower than that of the thin-film-type AC operating electroluminescence device. Further, in JP-A-2000-195674, to make the phosphor layer transparent, a sol-gel film must be subjected to heating treatment at a temperature of at least about 500°C. It is therefore impossible to use any flexible plastic substrate. To form the transparent layer in the upper portion of the device, it is necessary to expend labor to conduct the above heating treatment as much as 15 times. Furthermore, in the method disclosed in JP-B-1-18117, it is however difficult to form, in the interfaces made of these P-N junctions, an interface state excellent in the supply of electrons, which state can be formed in the interface between a light-emitting layer and an insulating layer, each of which is used in the thin-film-type EL device. In the case of electroluminescence, it has been found out that, by covering the surfaces of phosphor particles, the effect of shielding the electric field or voltage distribution along the direction of the electric field is changed, which is apt to cause such problems that sufficient electric field intensity cannot be kept inside the particles and that a short circuit may be locally induced.

SUMMARY OF THE INVENTION

The present invention resides in an AC operating electroluminescence device, which comprises a light-emitting layer containing phosphor particles and an insulating layer containing an inorganic dielectric substance, and which is capable of causing electroluminescence,
wherein a total thickness of the light-emitting layer and the insulating layer is less than 15 μm, and
wherein said electroluminescence device starts light emission when an average field intensity applied between electrodes in said electroluminescence device is 0.05 MV/cm or more.
Other and further features and advantages of the invention will appear more fully from the following description, taken in connection with the accompanying drawings.

BRIEF DESCRIPTION OF THE DRAWINGS

Fig. 1 is a cross sectional view schematically illustrating a structure of one embodiment of the AC operating electroluminescence device according to the present invention.
Fig. 2 is a schematic cross-sectional view illustrating a basic constitution of the conventional dispersion-type AC operating electroluminescence device.
Fig. 3 is a schematic cross-sectional view illustrating a basic constitution of the conventional thin-film-type AC operating electroluminescence device.
Fig. 4 is a schematic view illustrating a preferable embodiment of the EL device of the present invention.
Fig. 5 is a schematic view illustrating another preferable embodiment of the EL device of the present invention.

DETAILED DESCRIPTION OF THE INVENTION

According to the present invention, there are provided the following means:

(1) An AC operating electroluminescence device, comprising:

a light-emitting layer containing phosphor particles; and
an insulating layer containing an inorganic dielectric substance,

wherein said electroluminescence device is capable of causing electroluminescence,
wherein a total thickness of the light-emitting layer and the insulating layer is less than 15 μm, and
wherein the electroluminescence device starts light emission when an average field intensity applied between electrodes in said electroluminescence device is 0.05 MV/cm or more.
(2) The AC operating electroluminescence device according to the above item (1), wherein a total thickness of the light-emitting layer containing the phosphor particles and the insulating layer is 3 to 10 times as large as an average particle diameter of the phosphor particles.
(3) The AC operating electroluminescence device according to the above item (1) or (2), wherein an average particle diameter of the phosphor particles is 0.1 μm to 5 μm.
(4) The AC operating electroluminescence device according to any one of the above items (1) to (3), wherein a change in current consumption increases along with an increase in luminance occurs at a field intensity applied between the electrodes, which field intensity is equal to or higher than the average field intensity at which the light emission starts.

(5) The AC operating electroluminescence device according to any one of the above items (1) to (4), wherein the insulating layer containing the inorganic dielectric substance is provided so as not to cover an entire surface of the phosphor particles but to come into contact with a part of the surface of the phosphor particles in an electric field direction.

(6) The AC operating electroluminescence device according to any one of the above items (1) to (5), wherein the light-emitting layer has a surface smoothness of 1/8 or less of the average thickness of the light-emitting layer in terms of a center line average roughness.

Hereinafter, an embodiment of the present invention will be described in detail.

The AC operating electroluminescence device of the present invention is an electroluminescence device which has a light-emitting layer containing phosphor particles, for example, by being dispersed in a binder, and an insulating layer containing an inorganic dielectric substance but not containing any phosphor particles, and which is capable of causing electroluminescence; in which a total thickness of the light-emitting layer and the insulating layer is less than 15 μm; and in which the electroluminescence device starts light emission when an average field intensity applied between electrodes in the electroluminescence device is 0.05 MV/cm or more. Such an AC operating electroluminescence device of the present invention has a luminescence mechanism utterly different from that in the conventional EL device, although the EL device of the present invention has a form of the dispersed type using particles. That is, electrons are supplied from the phosphor interface level, and the resultant electrons introduced into the particles are accelerated by strong electric field, so as to be turned to hot electrons. It is presumed that the accelerated electrons collide with the luminous center which is doped in the crystal of the particles, to excite the center to cause emission of light in high luminance. First, therefore, it is necessary that the phosphor particles in the present invention have a size capable of producing hot electrons inside the particles. That is, the particle diameter is preferably 0.1 μm or more, taking the dielectric constant of the phosphor particles, crystal defects slightly contained in the phosphor particles, and other factors into consideration. The particle diameter is more preferably 0.2 μm or more, further preferably 0.3 μm or more.

In the AC operating electroluminescence device of the present invention, an average particle diameter of the phosphor particles is preferably 0.1 μm to 5 μm. The lower limit of the particle diameter is more preferably 0.2 μm or more, particularly preferably 0.3 μm or more. On the other hand, to give a sufficient field intensity to the device at a practical voltage, for example, a voltage of 100 to 300 V, it is necessary to make the thickness of the device sufficiently thin. For this purpose, the average particle diameter of the phosphor particles is preferably 5 μm or less, more preferably 3 μm or less, further preferably 2 μm or less.

Preferably, phosphor particles used in the present invention do not substantially contain Cu. The term "not to substantially contain Cu" means that the content of Cu is in an amount of 0.001 mol% or less, to the base material of the phosphor particles.

To gain the above-mentioned electric field intensity, it is necessary that the average thickness of the light-emitting layer is less than 15 μm, and generally 0.3 μm or more. The average thickness of the light-emitting layer is preferably 10 μm or less, and further preferably 8 μm or less. To keep the smoothness of the device, the thickness of the device is preferably 3 times or larger, more preferably 4 times or larger, the average particle diameter of the phosphor particles. Also, the device is preferably formed thinner for minimizing a voltage to be supplied from the outside. From the viewpoint of preventing luminance irregularity or unevenness and short-circuit, the device preferably has a thickness 3 to 10 times, more preferably 3 to 8 times larger than the average particle diameter of the phosphor particles. The thickness of the device referred to herein means the total thickness of the light-emitting (luminescent) layer containing the phosphor particles and the insulating layer containing the inorganic dielectric substance, which layers are sandwiched between electrodes.

Further, not only to emit the light without causing short-circuit but also to reduce the luminance irregularity on a light-emission surface, it is preferable that the light-emitting layer is high in surface smoothness, in other words, high in uniformity in the light-emitting layer thickness. The surface smoothness of the light-emitting layer is preferably 1/8 or less, more preferably 1/10 or less of the average thickness of the light-emitting layer, in terms of a center line average roughness. The surface smoothness of the light-emitting layer can be improved by adjusting the average particle diameter of the phosphor particles and the light-emitting layer thickness as mentioned above. Further, this improvement of smoothness can be achieved, for example, by leveling off the surface with a heat roller and the like and/or polishing the surface, after forming the light-emitting layer by coating, and/or providing an auxiliary layer for forming a smooth surface. In the present invention, the smoothness is expressed in the center line average roughness. Further, in the present invention, the surface smoothness and the average thickness of a layer are determined as follows: The device surface is cut off in a vertical direction passing the electroluminescence device center, to give a cross-section, and the measurement is conducted on the cross-section with a length of 200 μm at 20 points set at regular intervals, to calculate average values for the layer thickness and the smoothness. Further, in the present invention, the average particle diameter of the particles is defined as an average value of diameters of individual particles, which is determined by calculating the average of the diameters of 100 or more arbitrarily selected particles.

A feature of the AC operating electroluminescence device of the present invention is that the light emission starts at an average field intensity of 0.05 MV/cm or more, which is applied between the electrodes. According to the present invention, at the time when the luminance of the device reaches 1 cd/m$^2$, the device is judged to have started emitting light. The average field intensity means a value calculated by dividing an effective voltage applied between the electrodes by an average distance between the electrodes. The average field intensity is preferably 10 MV/cm or less, more preferably 8 MV/cm or less, for preventing dielectric breakdown of the device.

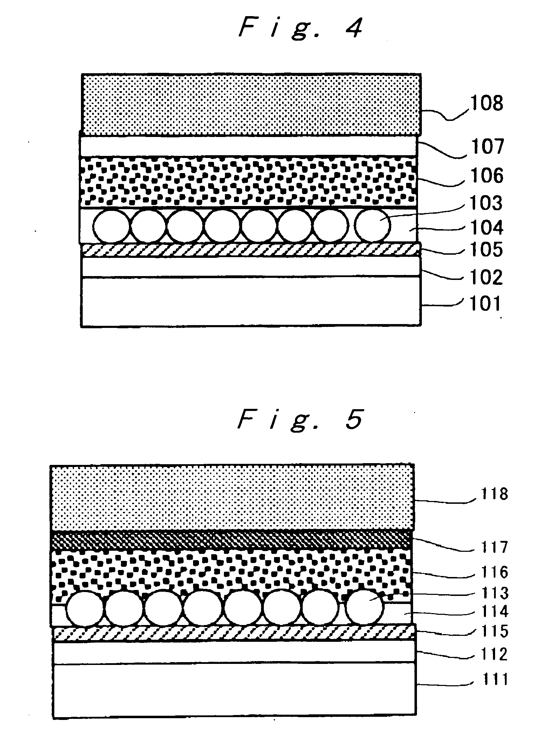

It is also found that the AC operating electroluminescence device of the present invention can improve its luminance more effectively, by providing the insulating layer containing the inorganic dielectric substance in contact with the surface of the phosphor in the electric field direction. That is, the contact area is relatively small, as compared with the case that phosphor particles contact the whole of a thin film interface as seen in any thin-film-type EL device. As a result, the contact approaches point contact. It is presumed that this matter causes the electric field to concentrate easily in this contact interface so that the injection of electrons may be accelerated more effectively. In the case of the disperse-type EL device using a dispersing agent (binder), when the whole of the phosphor particles are covered with an inorganic dielectric substance having a higher dielectric constant than those of the phosphor particles and the dispersing agent, the following things are expected: As the dielectric constant of the dielectric substance used for the covering is higher, the electric field inside the particles is more shielded; and even if electrons are introduced into the phosphor particles, a sufficient energy cannot be gained. Therefore, it is preferable that the inorganic dielectric substance is arranged not to cover the whole of the phosphor particles but to be contact with the surface of the individual phosphor particle in the direction of the external electric field. The exemplary constitutions of this embodiment of the electroluminescence device of the present invention are shown in Figs. 4 and 5.

Fig. 4 is a schematic view illustrating one preferable embodiment of the present invention. In Fig. 4, 101 represents a substrate exhibiting light scattering reflectivity; 102, a transparent electrode; 103, a phosphor particle in a phosphor particle layer (light-emitting layer) 104; 105 and 106, each an insulating layer containing a transparent inorganic dielectric substance and formed on the lower side and the upper side of the phosphor particle layer 104, respectively; 107, a transparent electrode or a metal electrode made of Al or the like; and 108, a protective sheet for the electrode 107. As illustrated in the embodiment shown in Fig. 4, the phosphor particles 103 in the phosphor particle layer 104 are in contact with the insulating layers 105 and 106 each containing the inorganic dielectric substance, but the whole of the individual phosphor particle 103 is not covered with the transparent dielectric substance.

In a modified embodiment of the above-mentioned one, a part of the insulating layer containing the inorganic dielectric material is applied in such a manner that the insulating layer covers a portion of the upper part of the phosphor particles, that is, the insulating layer containing the inorganic dielectric substance enters a part of the phosphor layer. In this way, contact points are increased so as to produce effects such that the smoothness of the surface of the device is improved. Thus, this variation or modified embodiment is preferable, and is schematically illustrated in Fig. 5.

In Fig. 5, 111 represents a glass substrate; 112, a transparent electrode; 113, an individual phosphor particle in a phosphor particle layer (light-emitting layer) 114; 115 and 116, each an insulating layer containing an inorganic dielectric substance and formed on the lower side and the upper side of the phosphor particle layer 114, respectively; 117, a transparent electrode; and 118, a protective sheet for the electrode 117. The lower portion of the upper insulating layer 116 containing the inorganic dielectric substance enters upper gaps among the phosphor particles 113 provided, so that the above-mentioned effects are exhibited. As illustrated in the embodiment shown in Fig. 5, in this case, similarly, the phosphor particles 113 in the phosphor particle layer 114 are in contact with the insulating layers 115 and 116 each containing the inorganic dielectric substance, but the whole surfaces of the phosphor particles 113 are not covered with the inorganic dielectric substance.

In the present invention, the term "not covering the whole of the surface" of the phosphor that exhibits electroluminescence, means that the (inorganic dielectric) substance is substantially in plane-contact with the particles, specifically, that the covered portion does not become 90% or more of the surface area of the phosphor. In the case that the phosphor is covered with ultrafine particles, the covered portion of the surface (that is, the portion which constitutes the contact interface) is a cluster or aggregate of points, and the area of the interface-constituting portion is substantially smaller than that in the case of plane-covering with a covering film. Further, in the case that the phosphor particles are covered with smaller fine-particles in this way, the electric field is caused to concentrate easily in the contact points, which is different from plane-contact. Thus, a required strong electric field can be supplied to the phosphor interface, while the breakdown voltage load of the whole of the device is decreased. Accordingly, it is possible to rather mention that this case is a preferable embodiment. In this case, the smoothness of the light-emitting layer may supposedly drop. However, it is found that irregularity in the light emission or luminescence is comparatively reduced, owing to, for example, a scattering effect of the fine particles. More specifically, the present inventors have hound that the effects of the present invention can be exhibited in the method of improving the smoothness, as well as in the above method of partially covering the phosphor surface with high dielectric particles or the like.

The voltage-current characteristics of the device of the present invention have a threshold value of voltage or average field intensity between electrodes, at the time of starting the light-emission described above. At a voltage or average field intensity higher than the threshold value, a change in electric current becomes larger, along with the luminescence intensity is increased and the luminance is increased. This feature cannot be found in the conventional disperse-type EL devices, and it would be preferable device characteristics according to the present invention. This feature and phenomenon are presumed as follows: The phosphor particle layer (light-emitting layer) functions as a capacitor or electrical condenser component having a given capacity below the threshold voltage, so that electric current hardly flows; but, when the applied voltage is more than the threshold voltage, the phosphor particle layer functions as a resistance component, to flow electric current, so that the flowing electric current is used as hot electrons to excite the luminous center. It can be therefore understood that the luminescence intensity increases remarkably from the vicinity of a point where the applied voltage exceeds the voltage threshold value. In preferable devices of the present invention, this property is evidently exhibited. In the present invention, when an alternating-current power supply which gives a frequency of 1 kHz is used, specifically, it is preferable that the electric current when generated with a voltage above the threshold value is increased 2 times or more the electric current when generated with a voltage below the threshold value.

As a result of study of the experimental data described later, according to the inventive constitution of the present invention, it is possible to attain an excellent electroluminescence device high in luminance and less in light-emission irregularity.

As examples of another preferable embodiments of the present invention, the following (A) and (B) can be included.

(A) An electroluminescence device, comprising:

an electroluminescence phosphor, which has a luminous center added therein, and which is a fine-particle having a particle diameter of 0.1 to 5 μm, and does not substantially contain Cu; and
an insulating layer containing an inorganic dielectric substance, which layer is provided so as to be brought into contact with a surface of the phosphor, in a direction of an electric field to be applied, without covering the whole surface of the phosphor,

wherein a total film thickness of a layer containing the phosphor and the insulating layer containing the inorganic dielectric substance is less than 15 μm.
(B) An AC operating electroluminescence device, comprising:

a pair of electrodes (i.e. a cathode and an anode); and
a light-emitting layer,

wherein the light-emitting layer is provided between the pair of electrodes, the light-emitting layer has a layer thickness of less than 15 μm, the light-emitting layer has dispersed therein phosphor particles each of which contains a luminescence center capable of being excited by collision of a hot electron, and the light-emitting layer starts light emission at a field intensity of 0.05 MV/cm or more.

The AC operating electroluminescence device of the present invention can realize such a high light emission luminance as to exceed a luminance of a conventional thin-film-type device as well as a conventional dispersion-type device. It is presumed that such a high light-emission luminance as to exceed the luminance of the conventional thin-film-type device can be achieved based on the followings: That is, in the AC operating electroluminescence device of the present invention, its light emission mechanism itself is similar to that of the conventional thin-film-type device. Accordingly, the conditions for the total reflection are not met because of an effect of a phosphor particle shape and a light-scattering effect of the entire light-emitting layer. As a result, an extraction efficiency of the light from the light-emitting layer is enhanced, as compared with the conventional thin-film-type device.

Further, according to the present invention, the device is hard to cause short circuit even under a high voltage, making it possible to suppress irregularity in luminance on a light-emission surface to a lower level.

Further, the AC operating electroluminescence device of the present invention has a structure of a dispersion-type-like structure and thus can be formed by a simple method used for the conventional dispersion-type devices, such as coating or screen printing, realizing the above-mentioned effects while suppressing increase of the manufacturing cost. Further, the electroluminescence device can be obtained as a flexible device exhibiting flexibility.

Referring to the drawings, the present invention will be described in more detail based on the following examples, but the present invention is not limited thereto.

Table 1

| Remarks | No. | Kind of phosphor | Average thickness of light-emitting layer | Average particle diameter of phosphor particle | Average field intensity when started light emission (kV/cm) | Maximum luminance (cd/m$^2$) |
|---|---|---|---|---|---|---|
| Comparative example | 1 | ZnS:Cu,Cl | 50 μm | 15 μm | 3 | 1,100 |
| | 2 | ZnS:Cu,Cl | 17 μm | 6 μm | 4 | 770 |
| | 3 | ZnS:Cu,Cl | 13 μm | 6 μm | 4 | 780 |
| | 4 | ZnS:Cu,Cl | 11 μm | 6 μm | 4 | 790 |
| | 5 | ZnS:Mn | 50 μm | 15 μm | Not emitted any light | None |
| | 6 | ZnS:Mn | 50 μm | 6 μm | Not emitted any light | None |
| | 7 | ZnS:Mn | 17 μm | 3 μm | 0.25 | 95 |
| | 8 | ZnS:Mn | 17 μm | 2 μm | 0.28 | 95 |
| | 9 | ZnS:Mn | 13 μm | 4 μm | 0.27 | 450 |
| | 10 | ZnS:Mn | 13 μm | 2 μm | 0.25 | 600 |
| Example according to this invention | 11 | ZnS:Mn | 7 μm | 4 μm | 0.23 | 3,100 |
| | 12 | ZnS:Mn | 7 μm | 2 μm | 0.21 | 6,000 |
| | 13 | ZnS:Mn | 5 μm | 4 μm | 0.19 | 6,100 |
| | 14 | ZnS:Mn | 5 μm | 2 μm | 0.18 | 12,000 |

(Example 1)

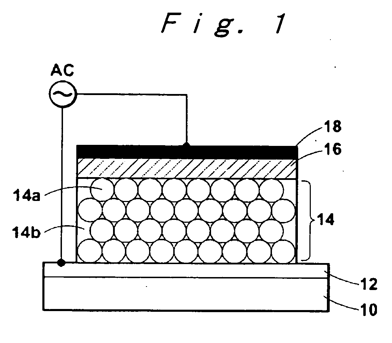

AC operating electroluminescence devices according to each example and those of each comparative example, as listed in Table 1 above, each had a structure as shown in Fig. 1, and they were produced in the following manner. A polyethylene terephthalate (PET) sheet was used for a substrate 10. On the substrate, a conductive transparent electrode 12 having a composition of $In_2O_3$ and $SnO_2$ was formed, by a vapor deposition method such as sputtering.

Then, ZnS:Mn or ZnS:Cu,Cl phosphor particles 14a were formed while changing their particle diameters for each example and each comparative example. A material prepared by dispersing the particles 14a in a cyanoethyl cellulose solution constituting a binder 14b was applied with changing a coated film thickness for each example and each comparative example, to form a light-emitting layer 14. Meanwhile, the ZnS:Mn phosphor particles were produced by a spray thermal decomposition method and/or baking in a muffle furnace while controlling an spray particle diameter, a ZnS precursor concentration, and heating temperature and atmosphere. In producing the ZnS:Cu,Cl phosphor particles, ZnS fine powders, copper sulfate, and NaCl, $MgCl_2$, and $BaCl_2$ as a flux were first mixed and baked in a muffle furnace at 1,200°C, to produce the particles. After that, the baked particles were washed with water and applied with a weak impact using a ball mill, and further baked at 700°C. Finally, the completed ZnS:Cu,Cl particles were washed with acid water and distilled water and then dried. After forming the light-emitting layer 14, a paste prepared by dispersing $BaTiO_3$ ultrafine particles having an average particle diameter of 200 nm into a cyanoethyl cellulose solution, as in the above, was applied, to form an insulating layer 16 with a thickness of 5 $\mu$m. Further, a carbon paste was applied on the insulating layer with a thickness of about 50 $\mu$m, to form a back electrode 18. Note that in Fig. 1, the particle diameter of the phosphor particles 14a and the thickness of the light-emitting layer 14 are exaggeratedly shown for convenience of explanation.

By composing a Sawyer-Tower circuit for each of the thus-produced devices, voltage-current characteristics and luminance at a frequency of 3 kHz were measured and evaluated. Note that the effective voltage applied between electrodes was 500 V or less. The maximum luminance was a value when the applied effective voltage was 500 V. The luminance was measured with Luminance Meter BM-9 (trade name) manufactured by Topcon Co., Ltd. The evaluation results are shown in Table 1.

As is apparent from the results shown in Table 1, the devices (Devices 1 to 4 of the comparative examples) using the ZnS:Cu,Cl particles as phosphor particles usually used in the conventional dispersion-type device, could only provide the maximum luminance of around 1,000 cd/m$^2$, even when applied with a sufficiently high electric field of 0.1 MV/cm or more, irrespective of the value of the average thickness of the light-emitting layer. This is presumably because when using the phosphor particles like ZnS:Cu,Cl particles which start light emission at a low field intensity of about several kV/cm, the luminance is saturated and thus the device cannot make effective use of the high field intensity.

Also, even in the case of using the ZnS:Mn particles as the phosphor particles, when the average thickness of the light-emitting layer was as large as 50 $\mu$m, the light emission could not start at the effective voltage of 500V or smaller (Devices 5 and 6 of the comparative examples). Further, the light emission could start even when the average thickness of the light-emitting layer was reduced down to 17 $\mu$m to 13 $\mu$m in which the total thickness of the light-emitting layer and the insulating layer was 22 to 18 $\mu$m, but the maximum luminance was extremely low (Devices 7 to 10 of the comparative examples).

Contrary to the above, in the devices in which the light-emitting layer had the average thickness of 7 $\mu$m or less in which the total thickness of the light-emitting layer and the insulating layer was 12 $\mu$m or less, the maximum luminance higher than 3,000 cd/m$^2$ was obtained (Devices 11 to 14 of the examples according to the present invention).

Further, in each device in which the average particle diameter of the ZnS:Mn phosphor particles was adjusted to 2 $\mu$m or less, in conjunction with the adjustment on the average thickness of the light-emitting layer as mentioned above, a higher maximum luminance was obtained (Devices 11 to 14 of the examples according to the present invention), as compared to the devices utilizing the phosphor particles of the average particle diameter of 4 $\mu$m.

The above particle diameter of 2 $\mu$m or less of the phosphor particles is not adopted for the phosphor particles of ZnS:Cu,Cl or the like added with a copper-containing activator and used in the conventional dispersion-type AC operating electroluminescence device, since such particle size causes a considerable deterioration in light-emission luminance and is therefore not useful. However, the AC operating electroluminescence device of the present invention was free of the limitations on the particle size imposed on the conventional dispersion-type device, by using the phosphor formed into a particle form, as the phosphor particle, which included a luminescence center, and which can be excited, for example, by the hot electrons colliding therewith.

(Example 2)

Next, as regards the suppression of luminance irregularity, the surface smoothness of the light-emitting layer was set to 1/8 or less of the average thickness of the light-emitting layer, in terms of the center line average roughness, as shown in Table 2 below. The results showed significant improvement in the luminance irregularity. Also, as is apparent from the results, the average particle diameter of the phosphor particles is preferably set to 1/3 or less of the average thickness of the light-emitting layer.

Table 2

| No. | Average thickness of light-emitting layer | (Average particle diameter of phosphor particles)/(Average thickness of light-emitting layer) | Surface smoothness of light-emitting layer | (Surface smoothness of light-emitting layer)/(Average thickness of light-emitting layer) | Luminance irregularity |
|---|---|---|---|---|---|
| 1 | 2 μm | 1/1 | 1.5 μm | 0.75 | 65% |
| 2 | 4 μm | 1/2 | 0.8 μm | 0.2 | 55% |
| 3 | 6 μm | 1/3 | 0.9 μm | 0.15 | 39% |
| 4 | 6 μm | 1/3 | 0.8 μm | 0.13 | 33% |
| 5 | 6 μm | 1/3 | 0.6 μm | 0.10 | 15% |
| 6 | 8 μm | 1/4 | 0.3 μm | 0.038 | 8% |
| 7 | 10 μm | 1/5 | 0.15 μm | 0.015 | 5% |

AC operating electroluminescence devices 1 to 7 listed in Table 2 above each had the structure as shown in Fig. 1, similar to the devices of the respective examples shown in Table 1; and they were each produced in the same manner as in Example 1 described above, except for the following changes. Used as the phosphor particles 14a in the light-emitting layer 14 were ZnS:Mn particles each with the average particle diameter of 2 $\mu$m. In forming the light-emitting layer 14, a material prepared by dispersing the phosphor particles 14a in a cyanoethyl cellulose solution constituting the binder 14b, was applied with changing a coated layer thickness for each device. Also, by controlling drying conditions after the application, the surface smoothness of the light-emitting layer was adjusted to vary according to each device. Further, the insulating layer was provided to have the thickness of 4 $\mu$m. Note that the surface smoothness of the light-emitting layer, as shown in Table 2, is represented in terms of the center line average roughness.

By composing a Sawyer-Tower circuit for each of the thus-produced devices, the voltage-current characteristics and luminance were measured. In the measurement, the effective voltage was set to 500 V or less. With a light emission surface area of 5 cm x 5 cm and a luminance detection aperture diameter of 1 mm, the difference between the maximum luminance and the minimum luminance in the light emission surface was obtained in terms of percentage according to the following equation, and the luminance irregularity in the light emission surface was evaluated based on this value for each device. Evaluation values of the luminance irregularity are shown in Table 2.

$$\text{Luminance irregularity(\%)} = [\{(\text{Maximum luminance}) - (\text{Minimum luminance})\}/(\text{Maximum luminance})] \times 100$$

The results of Table 2 revealed that the luminance irregularity could be suppressed to about 15% or lower level, with the devices (Devices 5 to 7 in Table 2) having the surface smoothness of the light-emitting layer set to 1/8 or less of, i.e. 0.125 times or less, the average thickness of the light-emitting layer, in terms of the center line average roughness. In this way, by adjusting the surface smoothness of the light-emitting layer, as well as the average thickness of the light-emitting layer and the average particle size of the phosphor particles, the AC operating electroluminescence device with high luminance and little luminance irregularity could be obtained.

Also, in general, the surface of the light-emitting layer can be made smooth easily, when the particle diameter of the phosphor particles is smaller than the average thickness of the light-emitting layer. In each of Devices 5 to 7 above, the average particle diameter of the phosphor particles was set to 1/3 or less of the average thickness of the light-emitting layer, which is preferable also from the viewpoint of preventing the device from causing short-circuit.

(Example 3)

Note that even in the case of using the phosphor particles of the same particle diameter, the smoothness can be improved by leveling off the surface with a heat roller or the like or polishing the surface after forming the light-emitting layer by coating, or forming an auxiliary layer for forming a smooth surface. For confirmation, the ZnS:Mn phosphor particles having an average particle diameter of 0.4 $\mu$m were dispersed into a thermoplastic cycloolefin-series resin solution containing $BaTiO_3$ fine particles, as a binder, with a solid content of 90%, and the resultant material was applied in a single layer form as the light-emitting layer, to form the EL device. On the other hand, after the application, a heat roller was used for compression treatment of the light-emitting layer, to form another EL device. Then, the tests were carried out for evaluating the improvement of the smoothness, i.e. the suppression of the luminance irregularity on both the devices. The heat roller temperature was set higher by 3°C than a fluidization initiation temperature of the thermoplastic resin.

As a result, in the device subjected to no compression treatment, the average thickness of the light-emitting layer was 2 $\mu$m and the surface smoothness of the light-emitting layer was 0.3 $\mu$m, and the luminance was 3,000 cd/$m^2$ or more. Despite such satisfactory results, the luminance irregularity of the light emission surface was 48%, which was comparatively large value.

In contrast, in the device subjected to the compression treatment, the average thickness of the light-emitting layer was 1.3 $\mu$m and the surface smoothness of the light-emitting layer was 0.08 $\mu$m, which value was 1/8 or less of the average thickness of the light-emitting layer. Also, the luminance irregularity of the light emission surface was suppressed to be 10% or less. Further, the device subjected to the compression treatment could exhibit the maximum luminance of 5,000 cd/$m^2$ or higher, which was extremely large value.

In addition, for confirming that the AC operating electroluminescence device satisfying the requirements of the present invention with the high luminance could be obtained, irrespective of the kind of the binder material used for the light-emitting layer or the insulating layer, the following tests were conducted.

(Example 4)

Four AC operating electroluminescence devices similar to the device of each example were formed, using the ZnS:Mn phosphor particles in the light-emitting layer in the following procedure, with the average particle diameter of the phosphor particles set to 0.4 μm and the average thickness of the light-emitting layer set to 2 μm. That is, the binder material for the light-emitting layer was changed from cyanoethyl cellulose to (1) a solvent-soluble silicone, (2) an epoxy resin, (3) a silica matrix of sol-gel film formed by using a silicate precursor, and (4) a UV curable resin, respectively. At this point, the resin was mixed with $BaTiO_3$ fine particles having an average particle diameter of 500 nm, such that electric field concentration was easily caused in the phosphor particles. Also, regarding the device having the layer containing the UV curable resin, the phosphor particles were dispersed into the resin and the resultant was applied in the layer form, followed by UV irradiation to cure the resin. In each case, the surface smoothness of the light-emitting layer was adjusted to 0.1 μm in terms of the center line average roughness. As a result, in each device, the field intensity at which the light emission started was 0.3 MV/cm to 0.5 MV/cm, and the high luminance of 1,000 cd/m$^2$ or more could be obtained at the effective voltage of the light-emitting layer of 500 V or less.

(Example 5)

Next, the ZnS:Mn phosphor particles having an average particle diameter of 1 μm were produced by a spray thermal decomposition method and annealing in a muffle furnace. The resultant phosphor particles were dispersed into a dimethylformamide (DMF) solution of cyanoethyl polyvinyl alcohol, and applied such that the phosphor particles formed a substantially single layer on a PET base on which an ITO electrode had been formed, to thereby form a phosphor particle layer. At this time, the solid content of the cyanoethyl polyvinyl alcohol was set to 25 mass% or less of the phosphor solid content. Thus, the phosphor surface was easily exposed at the time of drying. Separately, $BaTiO_3$ ultra-fine particles having an average particle diameter of 200 nm were dispersed into a DMF solution of cyanoethyl polyvinyl alcohol, and the resultant paste was applied onto an aluminum sheet having a thickness of 85 μm, thereby forming an insulating layer containing an inorganic dielectric substance. The phosphor-applied sheet thus prepared and the aluminum sheet thus-applied the insulating layer were roll-pressed under heating at 180°C, and the two sheets were bonded together such that the phosphor surface came into contact with the $BaTiO_3$ particles, which was the inorganic dielectric substance in the insulating layer, to form an EL device.

By composing a Sawyer-Tower circuit for each of the thus-produced devices, voltage-current characteristics were measured and evaluated at a frequency of 1 kHz and a device voltage in the range of 100 V to 500 V. It was confirmed that the threshold voltage (voltage Vc at which the light emission started) was at 0.1 MV/cm or more in terms of field intensity. Also confirmed was that the current was significantly increased at the voltage not lower than Vc. A current increase ratio thereof was twice or more as high as that obtained when the voltage is lower than Vc. Also, the luminance rapidly increased at the same time and the high luminance of 5,000 cd/m$^2$ or more was obtained at around 250 V.

(Example 6)

Thin Cu wirings having a width of about 100 μm were formed in a stripe form at a pitch of about 1 cm on an ITOPET base having a surface on which an ITO transparent electrode was formed by sputtering, to thereby provide a flexible sheet. Then, a tetraethoxy orthosilicate solution was hydrolyzed and adjusted to weak alkali, and the resultant solution was applied thinly onto the above flexible sheet, followed by dehydrogenation at about 100°C, to form a silica thin film with a thickness of 0.05 μm. As in the above examples, the ZnS:Mn phosphor particles having an average particle diameter of 0.8 μm were produced by a spray thermal decomposition method. The phosphor particles were dispersed into a DMF solution of a cyanoethyl polyvinyl alcohol/cyanoethyl pullulan mixture at a mixture ratio of 1:1, to prepare a phosphor paste. The resultant paste was applied onto the above silica thin film. Further, strontium titanate particles having an average particle diameter of 500 nm were dispersed into a DMF solution of a cyanoethyl polyvinyl alcohol/cyanoethyl pullulan mixture at a mixture ratio of 1:1, and the resultant dispersion was applied so as to contact the phosphor particles with the strontium titanate particles. The back electrode was formed by applying a mixture paste of carbon and silver with a thickness of 100 μm, to thereby prepare an EL device A.

Then, the surfaces of ZnS:Mn phosphor particles having an average particle size of 0.4 μm and produced by a spray thermal decomposition method, were uniformly covered with a silica film having a thickness of 0.2 μm by a fluidized bed CVD apparatus. The thus-covered phosphor particles were dispersed into a cyanoethyl cellulose solution similarly to the above, and applied onto a flexible sheet formed in the same manner as above by forming the silica layer on the ITO-PET base substrate having the thin copper wirings formed thereon. Further, strontium titanate particles having an average particle diameter of 500 nm were dispersed into a DMF solution of a cyanoethyl polyvinyl alcohol/ cyanoethyl pullulan mixture at a mixture ratio of 1:1, and the resultant dispersion was applied so as to contact the phosphor particles with the strontium titanate particles. The back electrode was formed by applying a mixture paste of carbon and silver with a thickness of 100 μm, to thereby prepare an EL device B.

Further, an El device C was produced in the same manner as in the EL device B, except that the ZnS:Mn phosphor particle surface was covered with barium titanate instead of silica used for covering the phosphor particle surface in the EL device B, in preparing a coating solution to be used in production of the EL device C.

Those EL devices A, B, and C were tested and evaluated for EL characteristics in the same manner as in Example 1. As apparent from the result of the evaluation, the EL device A exhibited satisfactory light emission. The EL device B was low in luminance. The EL device C hardly emitted light. The EL device B the entire phosphor surface of which was covered with silica, decreased its luminescence intensity to about 70%, as compared with the EL device A. To elaborate, it is found that arranging the inorganic dielectric substance such that it partially comes into contact with the phosphor could provide more favorable results than covering the entire surface of the phosphor with such a substance. Also, the results revealed that if the phosphor surface is covered with barium titanate having a high dielectric constant, the electric field is shielded to hinder light emission.

(Example 7)

Each device was produced based on the structure of the EL device A in Example 6, except that the phosphor particles were changed to those of the following compounds, respectively:

(i) BaAl$_2$S$_4$:Eu phosphor (average particle diameter 0.8 μm)

(ii) ZnS:Tb,F phosphor (average particle diameter 0.5 μm)

(iii) Ga$_2$O$_3$:Cr phosphor (average particle diameter 0.5 μm)

As regards the synthesis of these, synthesis based on a spray thermal decomposition method or synthesis in fused urea was carried out. A part of the phosphor surface was covered through the sol-gel reaction using the tetraethoxyorthosilicate solution, as used in Example 6. The results of SEM observation revealed that the sol-gel film was not uniform but silica partially adhered thereon. The phosphor particles were used for forming the light-emitting layer. Note that the thickness of the light-emitting layer was set to 3 μm, which was 3 or more times larger than the phosphor particle. After producing the devices in the above, the devices were tested and evaluated in the same manner as in the above examples. The evaluation result revealed that each device started light emission at the field intensity of 0.05 MV/m$^2$ or more, followed by a remarkable current consumption as well as an increase in luminance.

In the meantime, in the present invention, the materials constituting the light-emitting layer or other layers are not limited to those used in the above examples.

As the phosphor particles, any other phosphor may be used as far as the phosphor includes the luminescence center that may be excited by hot electrons colliding therewith, in addition to the phosphors described above. In other words, phosphors used in the light-emitting layer of the conventional thin-film-type AC operating electroluminescence device, e.g., phosphors as listed in Table 3 below can be used.

Table 3

| UV (Ultraviolet-emitting phosphor) | ZnF$_2$:Gd |
|---|---|
| B (Blue-light-emitting phosphor) | BaAl$_2$S$_4$:Eu, CaS:Pb, SrS:Ce, SrS:Cu, CaGa$_2$S$_4$:Ce, CaAl$_2$O$_4$:Eu |
| G (Green-light-emitting phosphor) | (Zn,Mg)S:Mn, ZnS:Tb,F, Ga$_2$O$_3$:Mn, Zn$_2$SiO$_4$:Mn |
| R (Red-light-emitting phosphor) | (Zn,Mg)S:Mn, CaS:Eu, ZnS:Sm,F, Ga$_2$O$_3$:Cr, MgGa$_2$O$_4$:Eu, Y$_2$O$_3$:Eu |

Also, the particles composed solely of the phosphor may be replaced by particles in which a phosphor layer is formed on the surface of a dielectric particle, for use in the phosphor particles. Further, the phosphor particles of two or more kinds may be used in combination.

The (particulate) phosphor is preferably applied in a coated amount of 1 $g/m^2$ to 20 $g/m^2$, more preferably 1 $g/m^2$ to 15 $g/m^2$, and particularly preferably 1.5 $g/m^2$ to 12 $g/m^2$. The density of the phosphor in the light-emitting layer is preferably 60 mass% to 95 mass%, more preferably 70 mass% to 90 mass%, and particularly preferably 75 mass% to 90 mass%.

As a binder in the light-emitting layer, an organic polymer can be preferably used, and more preferably an organic polymer having a relatively high dielectric constant such as the above cyanoethyl cellulose can be used. Also applicable is an organic polymer having a lower dielectric constant, such as polyethylene, polypropylene, a polystyrene-series resin, a silicone resin, an epoxy resin, or a vinylidene fluoride resin. Alternatively, use can be made of one prepared by mixing those organic polymers with, for example, $BaTiO_3$ or $SrTiO_3$ fine particles as a dielectric substance having a high dielectric constant, to adjust the dielectric constant.

Further, examples of the inorganic dielectric substance that can be used in the present invention include, in addition to $BaTiO_3$; oxides such as $Y_2O_3$, $TiO_2$, $SiO_2$, and $Al_2O_3$; and nitrides such as $Si_3N_4$, as described later.

Also, the term "insulating layer" as used herein means to include, for example, a thin film layer having a portion in which the phosphor is covered with the fine particles or a thin film layer of a shell-type structure having a non-covered portion on the periphery of the phosphor (e.g., incomplete thin film layer having a noncontinuous portion formed by the sol-gel reaction, for example), in addition to the insulating layer provided on the light-emitting layer by coating.

Examples of the material to be used for the insulating layer include, in addition to $BaTiO_3$ used in the above examples, for example, $Y_2O_3$, $Ta_2O_5$, $BaTa_2O_6$, $TiO_2$, $Sr(Zr,Ti)O_3$, $SrTiO_3$, $PbTiO_3$, $Al_2O_3$, $Si_3N_4$, ZnS, $ZrO_2$, $PbNbO_3$, and $Pb(Zr,Ti)O_3$. Preferably, the material having a high dielectric constant and hardly causing any dielectric breakdown is used, to apply a stable, high voltage to the light-emitting layer. Also, while in the above examples the insulating layer was only provided on one side of the light-emitting layer, it may be provided on the both sides. Meanwhile, in the case where the binder of the light-emitting layer is composed of the organic polymer containing no fine particle as the dielectric substance having a high dielectric constant, the hot electrons are injected to the phosphor particles in the light-emitting layer from the interface between the insulating layer and the light-emitting layer. However, in such a case that the binder of the light-emitting layer is mixed with the dielectric fine particles having a high dielectric constant at a high concentration and thus the binder with the high dielectric constant is expected to serve as a supply source of the hot electrons to the phosphor particles, the insulating layer can be omitted from the EL device.

As materials for the substrate, a flexible raw material such as the PET sheet used in the above examples can be used, or alternatively a glass substrate such as barium borosilicate glass or aluminosilicate glass can be used.

The transparent electrode can be formed of a material mainly containing ITO (indium tin oxide), ZnO:Al, $Zn_2In_2O_5$, $(Zn,Cd,Mg)O-(B,Al,Ga,In,Y)_2O_3-(Si,Ge,Sn,Pb,Ti,Zr)O_2$, $(Zn,Cd,Mg)O-(B,Al,Ba,In,Y)_2O_3-(Si,Sn,Pb)O$, $MgO-In_2O_3$, and the like, a GaN-based material, an $SnO_2$-based material, and the like.

The back electrode may be a metal electrode such as an aluminum electrode.

Also, an additional layer such as a surface protective layer may be provided in the layer structure of the above examples.

Each layer may be formed by any arbitrary method. However, from the viewpoint of reduction of manufacturing costs, all the layers are preferably formed by a simple method such as coating or screen printing, rather than other complicated methods such as vacuum deposition or sputtering. This is an advantage resulting from the fact that the AC operating electroluminescence device according to the present invention is of a dispersion-type-like structure, and the simple method such as coating or screen printing can be used for forming the light-emitting layer or the insulating layer.

Having described our invention as related to the present embodiments, it is our intention that the invention not be limited by any of the details of the description, unless otherwise specified, but rather be construed broadly within its spirit and scope as set out in the accompanying claims.

**Claims**

1. An AC operating electroluminescence device, comprising:

    a light-emitting layer containing phosphor particles; and
    an insulating layer containing an inorganic dielectric substance,

    wherein said electroluminescence device is capable of causing electroluminescence,
    wherein a total thickness of the light-emitting layer and the insulating layer is less than 15 μm, and
    wherein the electroluminescence device starts light emission when an average field intensity applied between electrodes in said electroluminescence device is 0.05 MV/cm or more.

2. The AC operating electroluminescence device according to claim 1, wherein a total thickness of the light-emitting layer containing the phosphor particles and the insulating layer is 3 to 10 times as large as an average particle diameter of the phosphor particles.

3. The AC operating electroluminescence device according to claim 1 or 2, wherein an average particle diameter of the phosphor particles is 0.1 μm to 5 μm.

4. The AC operating electroluminescence device according to any one of claims 1 to 3, wherein a change in current consumption increases along with an increase in luminance occurs at a field intensity applied between the electrodes, which field intensity is equal to or higher than the average field intensity at which the light emission starts.

5. The AC operating electroluminescence device according to any one of claims 1 to 4, wherein the insulating layer containing the inorganic dielectric substance is provided so as not to cover an entire surface of the phosphor particles but to come into contact with a part of the surface of the phosphor particles in an electric field direction.

6. The AC operating electroluminescence device according to any one of claims 1 to 5, wherein the light-emitting layer has a surface smoothness of 1/8 or less of the average thickness of the light-emitting layer in terms of a center line average roughness.

# F i g.  1

# Fig. 2

AC

28
26
24a
24
24b
22
20

Dispersion type

# Fig. 3

AC

38
34b
36
34a
32
30

Thin film type

## F i g . 4

108
107
106
103
104
105
102
101

## F i g . 5

118
117
116
113
114
115
112
111